Europäisches Patentamt

(19) European Patent Office

Office européen des brevets

(11) Veröffentlichungsnummer: **0 101 606**
A2

(12) # EUROPÄISCHE PATENTANMELDUNG

(21) Anmeldenummer: 83108119.5

(22) Anmeldetag: 17.08.83

(51) Int. Cl.³: **A 47 J 31/057**, A 47 J 31/54

(30) Priorität: 25.08.82 DE 3231479

(43) Veröffentlichungstag der Anmeldung: 29.02.84
Patentblatt 84/9

(84) Benannte Vertragsstaaten: **AT CH DE FR GB LI NL SE**

(71) Anmelder: **Braun Aktiengesellschaft, Rüsselsheimer Strasse 22, D-6000 Frankfurt/Main (DE)**

(72) Erfinder: **Schindler, Hans, Messeler Strasse 2, D-6073 Egelsbach (DE)**

(74) Vertreter: **Einsele, Rolf, Braun Aktiengesellschaft Postfach 1120 Frankfurter Strasse 145, D-6242 Kronberg Taunus (DE)**

(54) **Haushaltsgerät zur Zubereitung von heissen Getränken.**

(57) Bei einem Haushaltsgerät zur Zubereitung von heißen Getränken, insbesondere von Kaffee oder Tee, ist der Wasserbehälter (2) über einen Durchlauferhitzer (19), ein Steigrohr (20) und eine Aufbrüheinrichtung (42) mit einem Auffangbehälter (44) verbunden. Zwischen dem Wasserbehälter (2) und dem Durchlauferhitzer (19) ist ein von einem Thermostellglied (39) gesteuertes Absperrelement (21) angebracht, das sich erst dann öffnet, wenn der zum Durchlauferhitzer (19) gehörige Heizkörper (32) seine Betriebstemperatur erreicht hat. Dadurch wird einerseits sichergestellt, daß beim Befüllen des Wasserbehälters (2) in das Steigrohr (20) kein kaltes Wasser gelangt, welches nach Einschalten des Getränkezubereitungsgeräts zwangsläufig unaufgeheizt in die Aufbrüheinrichtung (42) transportiert würde. Andererseits kann in dem Heizkörper (32) auch eine Warmhalteplatte (46) bereits vor dem eigentlichen Beginn des Aufbrühvorgangs auf ihre Betriebstemperatur gebracht werden. Das Thermostellglied kann beispielsweise aus einem MTC-Widerstand (39) oder einem Bimetallstreifen bestehen, während das Absperrelement ein Magnetventil (21) oder ein mechanisch betätigtes Ventil sein kann.

Das erfindungsgemäße Getränkezubereitungsgerät ist besonders dann vorteilhaft anwendbar, wenn bei weitgehend aufgefülltem Wasserbehälter (2) nur eine kleine Menge eines heißen Getränkes hergestellt werden soll.

0101606
o4976

Die Erfindung betrifft ein elektrisch betriebenes Haushaltsgerät zur Zubereitung von heißen Getränken (Getränkezubereitungsgerät) mit einem Wasserbehälter, aus dem kaltes Wasser in einem Durchlauferhitzer aufgeheizt und über ein Steigrohr einer insbesondere Kaffe oder Tee enthaltenden Aufbrüheinrichtung zugeführt wird und von dort in einen Auffangbehälter geleitet wird, der auf einer, auf einem Sockel des Getränkezubereitungsgeräts angebrachten Warmhalteplatte steht. Der Wassertransport vom Wasserbehälter über das Steigrohr zur Aufbrüheinrichtung erfolgt dabei schubweise durch den im Durchlauferhitzer mittels eines Heizkörpers erzeugten Dampfdruck, der sich in Richtung des Wasserbehälters aufgrund eines entsprechend angebrachten Rückschlagventils nicht auswirken kann.

Derartige Getränkezubereitungsgeräte sind z.B. aus der DE-OS 2 264 oo9 bekannt, in der eine Kaffeemaschine beschrieben wird, die einen Wasserbehälter mit nachgeschaltetem Durchlauferhitzer und Steigrohr aufweist und bei der das auf Brühtemperatur erhitzte Wasser über ein Kaffeemehl enthaltendes Filter einer auf einer Wärmplatte stehenden Kaffeekanne zugeführt wird.

Die bekannten Getränkezubereitungsgeräte weisen den Nachteil auf, daß zu Beginn des Aufbrühvorgangs der Aufbrüheinrichtung immer eine bestimmte Menge kalten Wassers zugefügt wird, was bei der Zubereitung von kleinen Getränkemengen dazu führt, daß anstelle des gewünschten heißen Getränks nur ein mehr oder weniger lauwarmes Getränk entsteht. Der Grund dafür liegt darin, daß der Wasserbehälter und das Steigrohr als zwei miteinander kommunizierende Röhren immer den gleichen Wasserstandspegel aufweisen und daß der Durchlauferhitzer immer unterhalb der Auslaßöffnung des Wasserbehälters liegt. Somit gelangt in die Aufbrüheinrichtung zu Beginn eines jeden Aufbrühvorgangs eine bestimmte Menge Wasser, die den Durchlauferhitzer gar nicht passiert hat. Ein Wiederaufwärmen kleiner Getränkemengen auf der Warmhalteplatte ist kein gangbarer Weg zur Behebung dieses Nachteils, da neben der Wartezeit auch bei vielen Getränken insbesondere

...

bei Kaffee oder Tee dabei ein erheblicher Aromaverlust in Kauf genommen werden muß.

Der Erfindung liegt daher die Aufgabe zugrunde, den Zufluß von Wasser aus dem Wasserbehälter zur Aufbrüheinrichtung so zu steuern, daß auch bei der Herstellung kleiner Getränkemengen das betreffende Getränk frisch aufgebrüht und heiß zur Verfügung steht.

Diese Aufgabe wird dadurch gelöst, daß zwischen der Auslaßöffnung des Kaltwasserbehälters und den Durchlauferhitzer ein über ein Thermostellglied schaltbares Absperrelement vorgesehen ist, daß dafür sorgt, daß beim Auffüllen des Wasserbehälters nicht gleichzeitig auch Wasser in das Steigrohr gelangt und welches erst nach Erreichen der Betriebstemperatur des Heizkörpers den Abfluß von Wasser aus dem Wasserbehälter freigibt.

Das erfindungsgemäße Getränkezubereitungsgerät weist bei der Herstellung kleiner Mengen von heißen Getränken drei wesentliche Vorteile auf. Zum einen gelangt aufgrund des beim Auffüllen des Wasserbehälters geschlossenen Absperrelements kein kaltes Wasser in das dem Durchlauferhitzer nachgeschaltete Steigrohr, zum anderen gelangt das der Aufbrüheinrichtung zufließende Wasser erst dann zum Durchlauferhitzer, wenn dessen Heizkörper seine Betriebstemperatur erreicht hat. Schließlich kann in der zwischen dem Einschalten des Getränkezubereitungsgeräts und dem Öffnen des Absperrelements verstreichenden Zeit auch die Warmhalteplatte auf ihre Betriebstemperatur gebracht werden. Diese Vorteile des erfindungsgemäßen Getränkezubereitungsgerätes wirken sich vor allem dann aus, wenn in relativ großen derartigen Geräten verhältnismäßig kleine Mengen eines heißen Getränks hergestellt werden sollen.

Eine vorteilhafte Ausgestaltung des erfindungsgemäßen Getränkezubereitungsgeräts besteht darin, daß das Absperrelement aus einem Ventil mit einem über eine Magnetspule steuerbaren Stahlkern besteht und die Magnetspule mit dem als temperaturab-

...

hängigen Widerstand ausgebildeten Thermostellglied elektrisch in Reihe geschaltet ist.

In weiterer Ausgestaltung der Erfindung ist es vorteilhaft, daß der Stahlkern eine über einem Ventilsitz angeordnete, aus elastischem Material gebildete Dichtung und mindestens einen Durchlaufkanal aufweist. Hierdurch wird auf einfache Weise sichergestellt, daß nach Anheben der Dichtung vom Ventilsitz Wasser vom Wasserbehälter über den im Stahlkern vorgesehenen Durchlaßkanal zum Durchlauferhitzer und dann in den Auffangbehälter gelangt. Anstelle des im Stahlkern vorgesehenden Durchflußkanals können auch am Außenumfang des Stahlkerns gleichmäßig verteilte Vertiefungen oder Rillen vorgesehen sein, die eine Durchflußverbindung zwischen dem Wasserbehälter und dem Auffangbehälter herstellen.

Eine andere vorteilhafte Ausgestaltung der Erfindung besteht darin, daß das Thermostellglied als Bimetallstreifen ausgebildet ist, der mit einem als mechanisch betätigbares Ventil ausgebildeten Absperrelement zusammenwirkt.

Schließlich ist es von Vorteil, wenn der Auffangbehälter auf einer elektrisch heizbaren Warmhalteplatte abstellbar ist, die unabhängig vom Thermostellglied bereits vor Öffnen des Ventils zusammen mit dem Heizkörper des Durchlauferhitzers einschaltbar ist.

In der Zeichnung sind zwei Ausführungsbeispiele des erfindungsgemäßen Getränkezubereitungsgeräts dargestellt.

Es zeigen in schematischer Darstellung:

Fig. 1 eine erste Ausführungsform des erfindungsgemäßen Getränkezubereitungsgerätes, bei der das Thermostellglied als NTC-
Widerstand und das Absperrelement als Magnetventil ausgebildet ist.

Fig. 2 die zur ersten Ausführungsform gehörige elektrische Schaltung.

Fig. 3 eine Unteransicht einer zweiten Ausführungsform des erfindungsgemäßen Getränkezubereitungsgeräts, bei der sowohl das Thermostellglied als auch das Absperrelement als mechanisches Bauteil ausgeführt ist.

Fig. 4 eine Seitenansicht, teilweise im Schnitt, des Getränkezubereitungsgeräts nach der Fig. 3.

In der Zeichnung ist mit 2 ein Wasserbehälter bezeichnet, der mittels eines Deckels 4 verschlossen sein kann und in seinem Boden 6 eine Auslaßöffnung 8 aufweist. An die Auslaßöffnung 8 des Wasserbehälters 2 ist eine Zuführleitung 10 angeschlossen, die an ihrem Auslaßende einen Duschkopf 12 aufweist.

Die Zuführleitung 10 besteht aus einem an die Auslaßöffnung 8 des Wasserbehälters 2 angeschlossenen zylindrischen Rohrstück 14, das über einen 90$^o$-Krümmer 16 mit einem 180$^o$-Krümmer 18 verbunden ist, der zusammen mit einem elektrisch betriebenen Heizkörper 32 einen Durchlauferhitzer 19 bildet und der an einer Steigleitung 20 angeschlossen ist. Der 90$^o$-Krümmer 16 weist ein nur schematisch dargestelltes Rückschlagventil 17 auf, dessen Durchflußrichtung mit der Richtung eines Wasserstroms vom Wasserbehälter 2 zum Duschkopf 12 übereinstimmt. Die aus den einzelnen Teilen gebildete Zuführleitung 10 kann in einem auch den Wasserbehälter 2 einschließenden Gehäuse des Getränkezubereitungsgeräts integriert sein.

Im Bereich der Verbindungsstelle zwischen dem Rohrstück 14 und dem Krümmer 16 ist ein Magnetventil 21 angebracht, dessen Ventilsitz 22 mit einer zentrischen Bohrung 24 versehen ist, über der ein aus elastischem Material gebildeter Dichtkörper 26, beispielsweise eine Weichgummidichtung, liegt. Der Dichtkörper 26 ist mit einem ebenfalls

...

oberhalb des Ventilsitzes 22 vorgesehenen nicht rostenden zylindischen Stahlkern 28 fest verbunden, der durch die Wirkung des Magnetfeldes von einer auf dem Außenumfang des Rohrstücks 14 aufgeschobenen Magnetspule 3o nach oben bewegt werden kann.

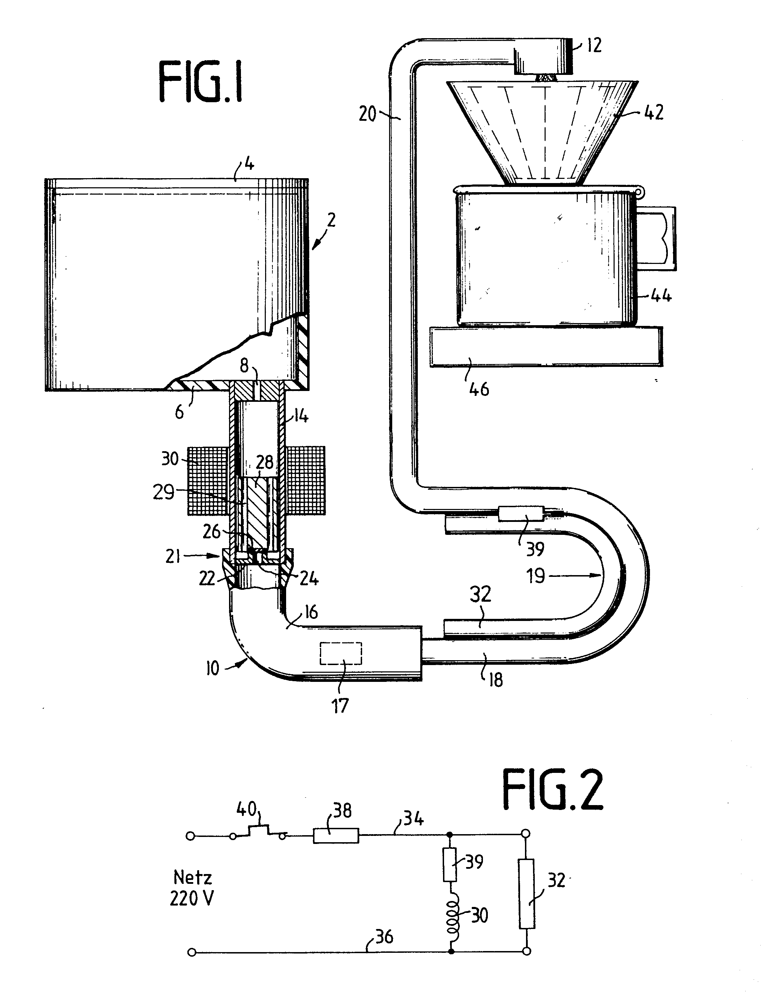

Wie aus Fig. 2 hervorgeht, ist dem Heizkörper 32, der einerseits über eine elektrische Leitung 34, eine Sicherung 38 und einen Ein- und Ausschalter 4o und andererseits über eine elektrische Leitung 36 an eine Netzspannung von 22o Volt anschließbar ist, eine Reihenschaltung aus einem NTC-Widerstand 39 und der Magnetspule 3o parallel geschaltet. Dabei ist der NTC-Widerstand 39 am Heizkörper 32 befestigt und zwar derart, daß neben der mechanischen Verbindung auch noch ein guter Wärmekontakt zwischen diesen beiden Teilen hergestellt wird.

Der über dem Ventilsitz 22 liegende Dichtkörper 26, der über die Magnetspule 3o betätigbar ist, befindet sich bei nicht vorhandenem oder nur schwachem Magnetfeld in seiner Schließstellung, das heißt er dichtet die Bohrung 24 so ab, daß kein Kaltwasser aus dem Wasserbehälter 2 in den Durchlauferhitzer 19 gelangen kann. Wird nun der Heizkörper 32 über den Schalter 4o eingeschaltet, so bleibt der über die Magnetspule 3o abhebbare Dichtkörper 26 vorerst in seiner Schließstellung, da der Widerstandswert des anfänglich sich auf Raumtemperatur befindlichen NTC-Widerstand 39 so groß ist, daß an der Magnetspule 3o eine zu geringe Spannung anliegt, um ein Magnetfeld zu erzeugen, welches den Stahlkern 28 nach oben heben könnte. Durch die vom Heizkörper 32 verursachte Temperaturerhöhung des NTC-Widerstands 39 erniedrigt sich dessen Widerstandswert aber so weit, daß nunmehr die Magnetspule 3o ausreichend mit Strom versorgt wird und den Stahlkern 28 und damit den Dichtkörper 26 nach oben verstellt, so daß die Bohrung 24 freigegeben wird und eine Durchflußverbindung zwischen dem Wasserbehälter 2 und dem Durchlauferhitzer 19 hergestellt wird.

...

Auf diese Weise ist es gewährleistet, daß einerseits nicht schon bei Befüllen des Wasserbehälters mit Wasser dasselbe bereits in das Steigrohr 2o gelangt und dabei den Durchlauferhitzer 19 passiert, ohne das dessen Heizkörper 32 eingeschaltet ist und daß andererseits erst dann kaltes Wasser aus dem Wasserbehälter 2 in den Durchlauferhitzer 19 gelangt, wenn dieser seine Betriebstemperatur erreicht hat.

Die für das Vorwärmen des Auffangbehälters 44 vorgesehene Warmhalteplatte 46 kann eine eigene, hier nicht dargestellte Heizvorrichtung enthalten, die gleichzeitig mit dem Heizkörper 32 eingeschaltet wird, oder aber der Heizkörper 32 wird sowohl für den Durchlauferhitzer 19 als auch zur Beheizung der Warmhalteplatte 46 verwendet.

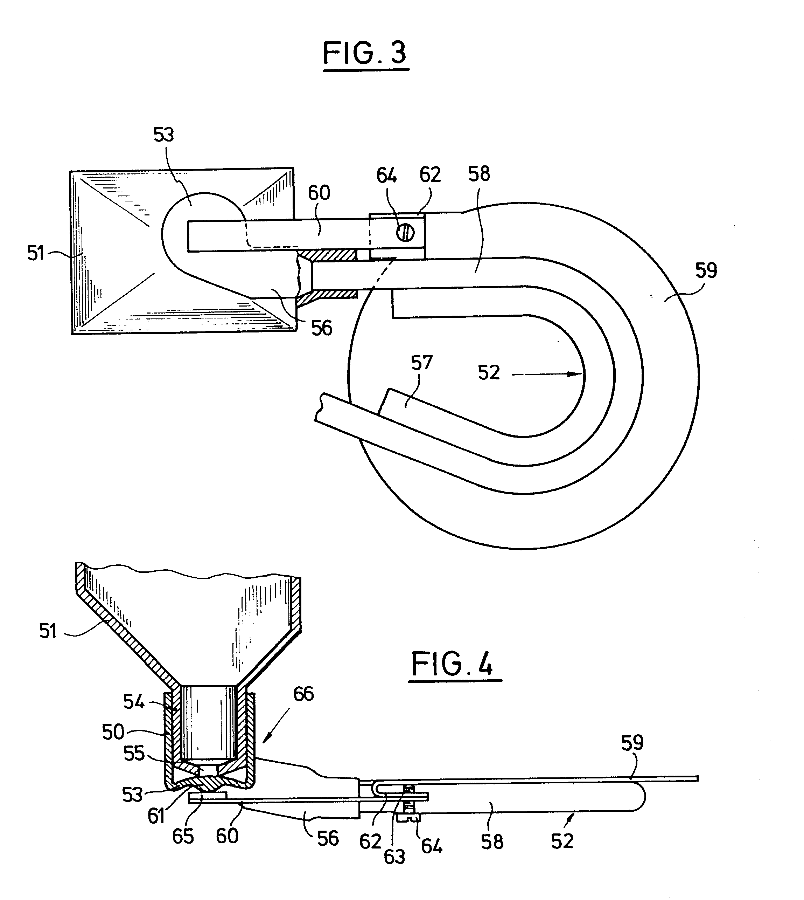

Die Figuren 3 und 4 zeigen eine weitere Ausführungsform des erfindungsgemäßen Getränkezubereitungsgeräts. Diese Ausführungsform zeichnet sich durch eine besonders einfach ausgebildete, nur wenige weitere Bauteile benötigende und deshalb kostengünstige Konzeption aus, bei der keine zusätzliche elektrische Energie verbraucht wird.

In diesen Figuren 3 und 4 sind nicht alle Bauteile des Getränkezubereitungsgeräts sondern nur der Wasserbehälter 51 mit dem im funktionell nachgeordneten, aus einem Heizkörper 57 und einem gekrümmten Rohrstück 58 bestehenden Durchlauferhitzer 52 und der dazwischen angeordneten Einrichtung zur temperaturabhängigen Regelung des Wasserzuflusses vom Wasserbehälter 51 zum Durchlauferhitzer 52 dargestellt.

Diese Regeleinrichtung umfaßt hier ein äußerst einfaches mechanisches Ventil 66, dessen beweglicher Teil zu einem Schlauchanschluß 50 gehört, der in üblicher Weise auf einen dem Wasserbehälter 51 angeformten Abflußstuzen 54 aufgesetzt wird. Der Abflußstuzen 54 weist einen konischen Boden mit einer zentrischen Abflußöffnung 55 auf, gegen die ein zum Schlauchanschluß 50 gehöriger elastischer Boden 53 in der Schließstellung des Ventils 66 membranartig zur Anlage kommt. Zum Weiterleiten

...

des aus dem Wasserbehälter 51 kommenden Wassers ist der Schlauchanschluß 50 mit einem hier etwa rechtwinklig abgebogenen Endstück 56
versehen, das hier unmittelbar an den Durchlauferhitzer 52 angeschlossen ist. Nach dem Passieren des Durchlauferhitzers 52 wird das dabei
auf Brühtemperatur erhitzte Wasser - wie in Figur 1 dargestellt -
wiederum über einen Duschkopf einer Aufbrüheinrichtung zugeführt.

Auf den Durchlauferhitzer 52 ist hier in gutem Wärmekontakt eine
Heizplatte 59 fest aufgesetzt, die wiederum zum Warmhalten des sich
in einem Auffangbehälter befindlichen frisch gebrühten Kaffees dient.
An einem der Heizplatte 59 angeformten, U-förmig gebogenen Schenkel
62 ist beispielsweise mittels Hartlötung ein Bimetallstreifen 60 angebracht, dessen freies, eine Druckplatte 65 aufweisendes Endstück unter Vorspannung an einem dem Boden 53 des Schlauchanschlusses 50 angeformten
tastenartigen Vorsprung 61 anliegt. Zur Änderung der Vorspannung des
Bimetallstreifen 60 kann zwecks Einstellung des Öffnungszeitpunktes
des aus der Abflußöffnung 55 und dem Vorsprung 61 gebildeten Ventils
eine, den Bimetallstreifen 60 durchdringende, in einer Gewindebohrung
63 des Schenkels 62 laufende und sich gegenüber der Heizplatte 59
abstützende Justierschraube 64 gedreht werden.

Vor der Inbetriebnahme des Getränkezubereitungsgeräts ist infolge der
Anlage des vom Bimetallstreifen 60 membranartig emporgewölbten Bodens
53 die Auslaßöffnung 55 des Anschlußstutzens 54 geschlossen.

Nach Einschalten des Getränkezubereitungsgerätes wird der sich während
der Aufheizphase des Durchlauferhitzers 52 verformende Bimetallstreifen
60 so weit nach unten biegen, daß er spätestens bei Erreichen der
Soll-Temperatur des Heizkörpers 57 von dem zum Schlauchanschluß 50
gehörigen Boden 53 abhebt, wodurch letzterer sich durch seine Eigenelastizit nach unten bewegt und damit die Auslaßöffnung 55 freigibt. Das im
Wasserbehälter 51 befindliche Wasser kann nunmehr ungehindert dem vorgeheizten
Durchlauferhitzer 52 zufließen, in welchem es dann auf Brühtemperatur

. . .

erwärmt und auf Grund eines hier nicht dargestellten, am Einlaß des Durchlauferhitzers 52 angebrachten Rückschlagventils nur in Richtung der Aufbrüheinrichtung transportiert wird. Die hierbei zugleich erhitzte Warmhalteplatte 59 wärmt nunmehr den darauf bereitgestellten Auffangbehälter vor, so daß auch bei diesem Ausführungsbeispiel des erfindungsgemäßen Getränkezubereitungsgeräts das in den Auffangbehälter einfließende frisch gebrühte Getränk vom Beginn des Brühprozesses an warm gehalten wird.

Nach dem Ausschalten des Getränkezubereitungsgerätes gelangt durch die relativ schnell erkaltende Warmhalteplatte 59 der Bimetallstreifen 60 innerhalb kurzer Zeit wieder in seine das Ventil schliessende Ausgangslage zurück, so daß bei erneuter Inbetriebnahme des Getränkezubereitungsgeräts die erfindungsgemäße Regeleinrichtung wieder voll funktionsfähig ist.

0101606
o4976

Patentansprüche

1. Haushaltsgerät zur Zubereitung von heißen Getränken mit einem Wasserbehälter, aus dem kaltes Wasser in einem, einen elektrisch betriebenen Heizkörper aufweisenden Durchlauferhitzer aufgeheizt und über ein Steigrohr einer insbesondere Kaffee oder Tee enthaltenden Aufbrüheinrichtung zugeführt wird und von dort in einen auf einer Warmhalteplatte stehenden Auffangbehälter gelangt, dadurch gekennzeichnet, daß zwischen der Auslaßöffnung (8) des Wasserbehälters (2) und dem Durchlauferhitzer (19, 52) ein, eine Durchfluß- und eine Sperrstellung aufweisendes Absperrelement (21, 5o) vorgesehen ist, dessen beide Stellungen von einem in gutem Wärmekontakt mit dem Heizkörper (32, 57) stehenden Thermostellglied (39, 6o) derart gesteuert werden, daß das Absperrelement (21, 66) sich nur dann in Durchflußstellung befindet, wenn der Heizkörper (32, 57) seine Betriebstemperatur erreicht hat.

2. Haushaltsgerät nach Anspruch 1, dadurch gekennzeichnet, daß das Thermostellglied aus einem temperaturabhängigen Widerstand (39) besteht und daß die jeweilige Stellung des Absperrelements von der zwischen den beiden Anschlüssen des Widerstands (39) anliegenden, temperaturabhängigen Spannung gesteuert wird.

3. Haushaltsgerät nach Anspruch 2, dadurch gekennzeichnet, daß es sich bei dem temperaturabhängigen Widerstand (39) um einen NTC-Widerstand handelt, der in Serie mit einer Magnetspule (3o) geschaltet ist, daß der elektrische Heizkörper (32) parallel zu dieser Serienschaltung geschaltet ist und daß mit Hilfe der Magnetspule (3o) die beiden Stellungen des Absperrelements gesteuert werden.

4. Haushaltsgerät nach Anspruch 3, dadurch gekennzeichnet, daß das Absperrelement als Magnetventil (21) ausgebildet ist, welches neben der Magnetspule (3o), einen mindestens einen Durchfluß-

...

kanal (29) aufweisenden Stahlkern (28), einen Dichtkörper (26), einem Ventilsitz (22) und eine Bohrung (24) aufweist, wobei der Stahlkern (28) durch die auf ihn von der stromdurchflossenen Magnetspule (3o) ausgeübten Kräfte so bewegt werden kann, daß das Magnetventil (21) in seine Durchflußstellung gelangt.

5. Haushaltsgerät nach Anspruch 4, dadurch gekennzeichnet, daß der Stahlkern (28) anstelle mindestens eines Durchflußkanals (29) am Außenumfang gleichmäßig verteilte Vertiefungen oder Rillen aufweist, die eine Durchflußverbindung zwischen dem Wasserbehälter (2) und dem Durchlauferhitzer (19) herstellen.

6. Haushaltsgerät nach Anspruch 1, dadurch gekennzeichnet, daß das Thermostellglied aus einem Bimetallstreifen (6o) besteht, dessen jeweilige, temperaturabhängige Lage die beiden von dem Absperrelement einnehmbaren Stellungen steuert.

7. Haushaltsgerät nach Anspruch 6, dadurch gekennzeichnet, daß der Bimetallstreifen (6o) mit einem als mechanisches Ventil (66) ausgestalteten Absperrelement zusammenwirkt.

8. Haushaltsgerät nach einem oder mehreren der vorhergehenden Ansprüche, dadurch gekennzeichnet, daß der Auffangbehälter (44) auf einer elektrisch heizbaren Warmhalteplatte (46, 59) abstellbar ist, deren Heizvorrichtung elektrisch parallel zum Heizkörper (32, 57) des Durchlauferhitzers (19, 52) geschaltet ist und dadurch bereits vor Öffnen des Absperrelements (21, 66) einschaltbar ist.

FIG.1

0101606

FIG.2

Netz
220 V

## FIG. 3

## FIG. 4